# EUROPÄISCHE PATENTANMELDUNG

(11) **EP 0 933 619 A1**
(43) Veröffentlichungstag der Anmeldung: **04.08.1999**
(21) Anmeldenummer: 98810057.4
(22) Anmeldetag: 28.01.1998
(51) Int. Cl.: G01F 15/02

(54) **Verfahren und Vorrichtung zur kontinuierlichen Messung und Umwertung eines Flüssigkeitsvolumens auf eine Bezugstemperatur**

(71) Anmelder: Hectronic GmbH, 79848 Bonndorf (DE)
(72) Erfinder: Leber, Adelbert, 78087 Mönchweiler (DE)
(74) Vertreter: Patentanwälte Breiter + Wiedmer AG

(57) **Zusammenfassung**

Eine Vorrichtung zur kontinuierlichen Messung des an einer Messstelle vorbegeführten Volumens einer Flüssigkeit umfasst einen Impulsgeber (10) zur Umwandlung der volumenproportionalen Drehbewegung einer Welle in erste elektrische Signale, einen im Bereich der Messstelle angeordneten Temperatursensor (14) zur Messung und Umwandlung der aktuellen Temperatur der Flüssigkeit in zweite elektrische Signale, und einen Mengenzähler zur Erfassung und Weiterverarbeitung elektrischer Signale zum Zweck einer Volumenanzeige und/oder -registrierung. Mittels der elektrischen Signale des Temperatursensors (14) erfolgt eine Mengenumwertung auf eine Bezugstemperatur. In einer Auswerteelektronik wird die Mengenumwertung auf die Bezugstemperatur mittels der vom Temperatursensor (14) ausgehenden elektrischen Signale durch unmittelbare Korrektur der vom Impulsgeber (10) erzeugten volumenproportionalen elektrischen Signale vor deren Weiterleitung an den Mengenzähler durchgeführt. Die herkömmliche Bauform des Impulsgebers kann beibehalten werden. Damit können insbesondere bestehende Volumenerfassungssysteme leicht und kostengünstig um die Mengenumwertung auf Bezugstemperatur nachgerüstet werden.

## Beschreibung

Die Erfindung betrifft ein Verfahren und eine Vorrichtung zur kontinuierlichen Messung des an einer Messstelle vorbeigeführten Volumens einer Flüssigkeit, mit einem Impulsgeber zur Umwandlung der volumenproportionalen Drehbewegung einer Welle in erste elektrische Signale, mit einem im Bereich der Messstelle angeordneten Temperatursensor zur Messung und Umwandlung der aktuellen Temperatur der Flüssigkeit in zweite elektrische Signale, und mit einem Mengenzähler zur Erfassung und Weiterverarbeitung elektrischer Signale zum Zweck einer Volumenanzeige und/oder -registrierung, wobei mittels der elektrischen Signale des Temperatursensors eine Mengenumwertung auf eine Bezugstemperatur erfolgt.

Eine allgemein bekannte Technik zur Volumenmessung von Flüssigkeiten basiert auf dem Verdrängungsprinzip und umfasst beispielsweise den Hubkolbenzähler, das Drehspiralenmessprinzip und den Ovalradzähler. Bei allen diesen Messvorrichtungen wird das gemessene Volumen in eine volumenproportionale Drehbewegung einer Welle umgesetzt. Diese Drehbewegung wird mit Hilfe eines Impulsgebers in elektrische Signale umgewandelt. Bei einer bekannten Messmethode werden beispielsweise volumenproportionale elektrische Impulse üblicherweise von einem nachgeschalteten elektronischen Zähler erfasst und weiterverarbeitet. Die Weiterverarbeitung betrifft sowohl die Anzeige des Messwertes als auch die Registrierung im eichtechnischen Sinne.

Eine Volumenmessung nach dem Verdrängungsprinzip kann die temperaturbedingte Volumenausdehnung der gemessenen Flüssigkeit nicht kompensieren. Diese Volumenausdehnung kann sich unter ungünstigen Bedingungen für den Kunden nachteilig auswirken. Der Gesetzgeber schreibt deshalb vor, dass z.B. bei Grossabgaben das gemessene Volumen auf eine Bezugstemperatur umzuwerten ist.

Diese Umwertung erfolgt bei heute üblichen Lösungen mittels eines Temperatursensors, der die Temperaturinformation direkt an den nachgeschalteten elektronischen Zähler abgibt, wo dann die Umwertung des gemessenen Volumens auf eine Bezugstemperatur erfolgt. In Fallen, wo bestehende Systeme auf die temperaturkorrigierte Mengenumwertung nachgerüstet werden sollen, muss jeweils der elektronische Zähler entsprechend nachgerüstet werden. In vielen Fällen ist eine solche Nachrüstung technisch nicht möglich, so dass ein neuer elektronischer Zähler eingesetzt werden muss, was mit erheblichen Kosten verbunden ist.

Der Erfindung liegt daher die Aufgabe zugrunde, ein Verfahren sowie eine Vorrichtung der eingangs genannten Art zu schaffen, mit welchen auch eine Nachrüstung bestehender Volumenmessysteme unter Beibehaltung eines bereits vorhandenen Mengenzählers einfach und kostengünstig möglich ist.

Zur erfindungsgemässen Lösung der Aufgabe führt beim Verfahren, dass die Mengenumwertung auf die Bezugstemperatur mittels der vom Temperatursensor ausgehenden elektrischen Signale durch unmittelbare Korrektur der vom Impulsgeber erzeugten volumenproportionalen elektrischen Signale vor deren Weiterleitung an den Mengenzähler durchgeführt wird.

Bevorzugt werden im Impulsgeber volumenproportionale elektrische Impulse erzeugt, und die zur Mengenauswertung auf die Bezugstemperatur erforderliche Korrektur wird durch Hinzufügen bzw. Auslassen von Impulsen durchgeführt.

Die zur Mengenumwertung gemessenen elektrischen Signale werden vor deren Weiterleitung an den Mengenzähler in einer Auswerteelektronik aufbereitet. Bei einer besonders zweckmässigen Ausgestaltung des erfindungsgemässen Verfahrens wird die Funktionalität der Auswerteelektronik durch Parametrierung dem jeweiligen Anwendungszweck angepasst. Hierbei können die durch Parametrierung erfassten und beispielsweise in einem Parameter-Modul gespeicherten Parameter entsprechend dem jeweiligen Anwendungszweck geladen werden.

Bezüglich der Vorrichtung wird die Aufgabe dadurch gelöst, dass eine Auswerteelektronik vorgesehen ist, in der die Mengenumwertung auf die Bezugstemperatur mittels der vom Temperatursensor ausgehenden elektrischen Signale durch unmittelbare Korrektur der vom Impulsgeber erzeugten volumenproportionalen elektrischen Signale vor deren Weiterleitung an den Mengenzähler durchgeführt wird.

Die Auswerteelektronik kann im Impulsgeber integriert sein. Wo dies aus praktischen Gründen angezeigt ist, kann die Auswerteelektronik auch vom Impulsgeber getrennt sein. In jedem Fall kann die herkömmliche Bauform des Impulsgebers beibehalten werden.

Der erfindungsgemässe ausgestaltete Impulsgeber kann mechanisch und elektrisch so ausgeführt sein, dass bei einer Nachrüstung eines bestehenden Volumenmessystems ein direkter Austausch möglich ist. Selbstverständlich ist ein Einsatz auch möglich und wirtschaftlich vorteilhaft, wo ein kompatibler Ersatz des bestehenden Impulsgebers nicht möglich ist.

Die verwendete hochintegrierte Elektronik im Impulsgeber gestattet einen breiten Einsatzbereich der Erfindung. So können beispielsweise unterschiedliche Berechnungsformeln, wie sie für unterschiedliche flüssige Medien notwendig sind, hinterlegt werden. Ebenso können unterschiedliche Temperatursensoren für unterschiedliche Anwendungszwecke eingesetzt werden. Die Anpassung der Funktionalität der Auswerteelektronik an den jeweiligen Anwendungszweck kann beispielsweise dadurch erfolgen, dass die nominellen Impulsraten je Umdrehung und die Drehrichtung parametriert werden.

Ein typisches Anwendungsgebiet der vorliegenden Erfindung ist die Volumenmessung von Kraftstoffen. Die Transportkette für die Verteilung der Kraftstoffe erfolgt typischerweise ab den Grosslagern über Zwischen- oder Kleinlager an den Endverbraucher oder an die Tankstelle, wo die Verteilung über die Kraftstoffsäule an den Endverbraucher endet. An jedem Übergabepunkt erfolgt üblicherweise eine Volumenmessung der übergebenen Kraftstoffmenge, wobei die Temperatur des Mediums zu verschiedenen Zeitpunkten unterschiedlich sein kann. Wenn bei jeder Volumenmessung eine Umwertung des Volumens auf Bezugstemperatur erfolgt, wird die Temperaturausdehnung des Mediums bis hin zum Endverbraucher kompensiert.

Die Erfindung ist generell in Anwendungen einsetzbar, wo bei der Volumenmessung von Flüssigkeiten eine Umwertung auf Bezugstemperatur technisch oder wirtschaftlich erforderlich ist. Dies ist beispielsweise auch in der Prozesstechnik und in der chemischen Industrie der Fall. Ein besonderer Anwendungsbereich der Erfindung liegt in der Volumenmessung von Kraftstoffen im eichpflichtigen Bereich.

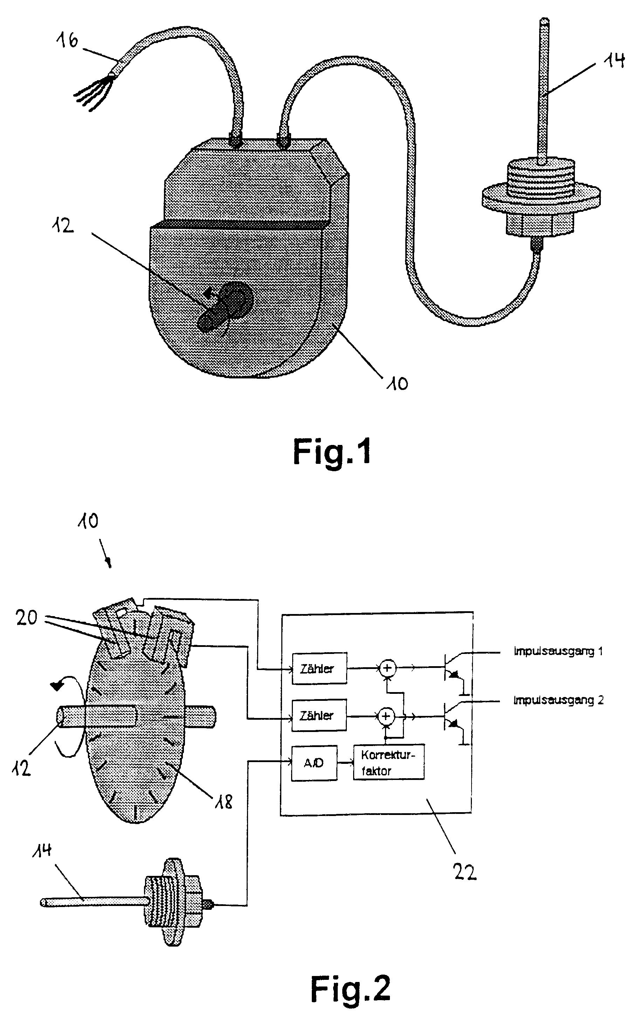

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht aufeinen Impulsgeber mit angeschlossenem Temperatursensor;
- Fig. 2: das Funktionsprinzip des Impulsgebers von Fig. 1.

Ein Impulsgeber 10 für die Umwandlung einer von einem Volumenmessystem erzeugten Drehbewegung einer Welle weist eine Antriebswelle 12 auf Der Impulsgeber 10 ist in einem Volumenmessystem so angeordnet, dass die Übertragung der Drehbewegung von einer Welle des Volumenmessystems auf die Antriebswelle 12 des Impulsgebers mittels eines Getriebes oder einer Kupplung erfolgen kann. Ein dem Impulsgeber 10 zugeordneter Temperatursensor 14 dient der Messung der aktuellen Temperatur des Mediums. Weiter umfasst der Impulsgeber 10 eine in diesen integrierte Auswerteelektronik 22 zur Auswertung der Volumen- und Temperaturinformation und zur Weitergabe der ausgewerteten Information über eine elektrische Verbindung 16 an einen angeschlossenen, in der Zeichnung nicht dargestellten Zähler.

Die Umwandlung der Drehbewegung der Antriebswelle 12 in elektrische Signale erfolgt mittels eines inkrementalen Weggebers mittels einer Einrichtung 20 zur optischen oder magnetischen Abtastung einer Geberscheibe 18. Die Abtastung erfolgt vorzugsweise zweikanalig mit einer Phasenverschiebung um 90° zur Erkennung der Drehrichtung der Antriebswelle 12. Die Geberscheibe 18 kann mit unterschiedlichen Impulszahlen ausgestattet sein, gebräuchliche Werte sind z.B. 10/25/50/100 Impulse je Umdrehung. Die so generierten Impulse werden der Auswerteelektronik 22 zur weiteren Auswertung zugeführt.

Die über den Temperatursensor 14 erfasste Temperatur des Mediums wird als elektrisches Signal ebenfalls der gleichen Auswerteelektronik 22 zur weiteren Auswertung zugeführt. Des weiteren stellt diese Auswerteelektronik 22 einen Zählausgang zum Anschuss eines elektronischen Zählers zur Verfügung. Dieser Zählausgang ist üblicherweise als zweikanaliger Inkrementalausgang mit 90° Phasenverschiebung ausgeführt.

Der Temperatusensor 14 wird entweder unmittelbar vor oder nach dem Volumenmessystem in einer Verrohrung so angeordnet, dass die Spitze des Sensors die Temperatur des durchfliessenden Mediums erfassen kann. Während eines Messvorganges wird das gemessene Volumen und die Temperatur des Mediums von der Auswerteelektronik 22 kontinuierlich erfasst und ausgewertet. Parallel dazu werden die Volumenimpulse am Ausgang der Auswerteelektronik 22 an einen nachgeschalteten Zähler abgegeben. Gleichzeitig erfolgt die Berechnung eines Korrekturfaktors aufgrund einer gegebenen mathematischen Formel für die Umwertung des gemessenen Volumens auf eine Bezugstemperatur von beispielsweise 15°C. Die Ausgabe der Volumenimpulse wird aufgrund des aktuellen Korrekturfaktors korrigiert. Ist der Korrkturfaktor z.B. aktuell 0,97 (also -3%), so erfolgt die Korrektur durch Wegfall jedes 33. Impulses. Ist der Korrekturfaktur aktuell z.B. 1,05 (also +5%), so wird bei jedem 20. Impuls jeweils ein Impuls eingefügt. Auf diese Weise erfolgt eine kontinuierliche Korrektur der Volumenimpulse am Impulsgeber 10 selbst. Nachgeschaltete Zähler können ohne Modifikation das auf Bezugstemperatur umgewertete Volumen erfassen, anzeigen und registrieren.

Im Rahmen der durch die Patentansprüche definierten Erfindung sind selbstverständlich verschiedene Ausführungsvarianten denkbar und möglich. Einige dieser Ausführungsvarianten sind nachfolgend kurz umschrieben.

Die Umwandlung der Drehbewegung in inkrementale Impulse kann mittels optischer oder induktiver Abtastung der Geberscheibe 18 erfolgen. Ebenso könnte jedoch ein Tachogenerator Verwendung finden. Die am Ausgang generierte nominelle Anzahl Impulse je Umdrehung muss nicht unbedingt mit der Impulsanzahl der Geberscheibe 18 übereinstimmen. So ist es beispielsweise möglich, dass die Auswerteelektronik 22 eine Teilung oder Multiplikation um einen vorgegebenen Faktor vornimmt, um die Ausgangsimpulszahl dem angeschlossenen Zähler anzugleichen. Hiervon abhängig wird sodann die Korrektur der Impulse aufgrund der temperaturabhängigen Mengenumwertung vorgenommen.

Die Messung der Temperatur kann mittels eines Pt 100 oder Pt 1000 Temperatursensors in 2- oder 4-Leitertechnik erfolgen. Ein zur gemessenen Temperatur proportionaler Widerstand wird in einen Spannungs- oder Stromwert umgewandelt. In diesem Fall erfolgt in der Auswerteelektronk 22 eine A/D-Wandlung, damit der Korrekturfaktor in digitaler Form berechnet werden kann. Alternativ dazu kann ein Temperatursensor 14 verwendet werden, der bereits im Sensor selbst eine digitale Umwandlung der Temperaturinformation vornimmt. Als Messprinzip wird vorzugsweise die Temperatuabhängigkeit von Halbleitermaterialien herangezogen. Die Übertragung der Temperaturinformation erfolgt mittels eines Datenübertragungsprotokolls oder frequenzananlog.

Die Impulsausgänge zur Übertragung der volumenproportionalen Impulse können durch eine Datenschnittstelle ersetzt werden. Die Übertragung der Volumeninformation erfolgt sodann mittels eines geeigneten Datenprotokolls. Die Datenschnittstelle kann je nach Anwendungsfall eine Punkt-zu Punkt-Verbindung oder eine Multipunkt-Verbindung sein.

Sowohl der Impulsgeber 10 als auch der Temperatursensor 14 müssen für den Anwendungsbereich bei der Volumenmessung von Kraftstoffen der A1-Klassifizierung explosionsgeschützt ausgeführt sein. Für andere Anwendungen kann ggf. auf den Explosionsschutz verzichtet werden.

Für bestimmte Anwendungen kann es sinnvoll sein, dass die Auswerteelektronik 22 vom Impulsgebergehäuse getrennt ist. Die Auswerteelektronik 22 kann dann an einer anderen beliebigen Stelle angeordnet werden. Dies könnte z.B. an einer nicht mehr explosionsgefährdeten Stelle sein.

Eine weitere mögliche Ausführungsform ist die vollständige Integration der Komponenten Impulsgeber 10, Temperaturfühler 14 und Auswerteelektronik 22 im Volumenmessystem selbst. Dies gilt für alle bekanten Volumenmessprinzipien wie z.B. Hubkolbenzähler, Drehspiralenmessprinzip oder Ovalradzähler.

Für bestimmte Anwendungen kann es sinnvoll sein, dass der Impulsgeber 10 um einen Summierzähler erweitert wird. Dieser Summierzähler summiert das gemessene Volumen über die gesamte Betriebszeit des Impulsgebers. Dabei sind zwei Ausführungsvarianten möglich:

### a) Mechanische Summiereinrichtung.

In diesem Fall wird ein mechanisches Zählwerk direkt von der Antriebswelle 12 des Impulsgebers 10 angetrieben. Hier erfolgt somit die Summierung des nicht umgewerteten Volumens.

### b) Elektronische Summiereinrichtung.

Hier erfolgt die Summierung elektronisch in der Auswerteelektronik 22 in einem Summierspeicher, wobei sowohl das nicht umgewertete Volumen als auch das auf Bezugstemperatur umgewertete Volumen aufsummiert werden kann. Die Anzeige erfolgt auf einem entsprechend geeigneten Display. Alternativ zur Anzeige auf dem Display können die aufsummierten Volumen bei der Ausführung mit Datenschnittstelle auch über diese Datenschnittstelle übertragen werden.

## Patentansprüche

1. Verfahren zur kontinuierlichen Messung des an einer Messstelle vorbeigeführten Volumens einer Flüssigkeit, mit einem Impulsgeber (10) zur Umwandlung der volumenproportionalen Drehbewegung einer Welle in erste elektrische Signale, mit einem im Bereich der Messstelle angeordneten Temperatursensor (14) zur Messung und Umwandlung der aktuellen Temperatur der Flüssigkeit in zweite elektrische Signale, und mit einem Mengenzähler zur Erfassung und Weiterverarbeitung elektrischer Signale zum Zweck einer Volumenanzeige und/oder -registrierung, wobei mittels der elektrischen Signale des Temperatursensors (14) eine Mengenumwertung auf eine Bezugstemperatur erfolgt,
dadurch gekennzeichnet, dass
die Mengenumwertung auf die Bezugstemperatur mittels der vom Temperatursensor (14) ausgehenden elektrischen Signale durch unmittelbare Korrektur der vom Impulsgeber (10) erzeugten volumenproportionalen elektrischen Signale vor deren Weiterleitung an den Mengenzähler durchgeführt wird.

2. Verfahren nach Anspruch 1, dadurch gekennzeichnet, dass im Impulsgeber (10) volumenproportionale elektrische Impulse erzeugt werden und die zur Mengenumwertung auf die Bezugstemperatur erforderliche Korrektur durch entsprechendes Hinzufügen bzw. Auslassen von Impulsen durchgeführt wird.

3. Verfahren nach Anspruch 1 oder 2, dadurch gekennzeichnet, dass die zur Mengenumwertung gemessenen elektrischen Signale vor deren Weiterleitung an den Mengenzähler in einer Auswerteelektronik (22) aufbereitet werden.

4. Verfahren nach Anspruch 3, dadurch gekennzeichnet, dass die Funktionalität der Auswertelektronik (22) durch Parametrierung dem jeweiligen Anwendungszweck angepasst wird.

5. Verfahren nach Anspruch 4, dadurch gekennzeichnet, dass die durch Parametrierung erfassten und vorzugsweise in einem Parameter-Modul gespeicherten Parameter entsprechend dem jeweiligen Anwendungszweck geladen werden.

6. Vorrichtung zur kontinuierlichen Messung des an einer Messstelle vorbeigeführten Volumens einer Flüssigkeit, mit einem Impulsgeber (10) zur Umwandlung der volumenproportionalen Drehbewegung einer Welle in erste elektrische Signale, mit einem im Bereich der Messstelle angeordneten Temperatursensor (14) zur Messung und Umwandlung der aktuellen Temperatur der Flüssigkeit in zweite elektrische Signale, und mit einem Mengenzähler zur Erfassung und Weiterverarbeitung elektrischer Signale zum Zweck einer Volumenanzeige und/oder -registrierung, wobei mittels der elektrischen Signale des Temperatursensors (14) eine Mengenumwertung auf eine Bezugstemperatur erfolgt,
dadurch gekennzeichnet, dass
eine Auswerteelektronik (22) vorgesehen ist, in der die Mengenumwertung auf die Bezugstemperatur mittels der vom Temperatursensor (14) ausgehenden elektrischen Signale durch unmittelbare Korrektur der vom Impulsgeber (10) erzeugten volumenproportionalen elektrischen Signale vor deren Weiterleitung an den Mengenzähler durchgeführt wird.

7. Vorrichtung nach Anspruch 6, dadurch gekennzeichnet, dass die Auswerteelektronik (22) im Impulsgeber (10) integriert ist.

8. Vorrichtung nach Anspruch 6, dadurch gekennzeichnet, dass die Auswerteelektronik (22) vom Impulsgeber getrennt ist.

9. Anwendung des Verfahrens nach einem der Ansprüche 1 bis 5 oder Verwendung einer Vorrichtung nach einem der Ansprüche 6 bis 8 zur Volumenmessung von Kraftstoffen im eichpflichtigen Bereich.
